# EUROPÄISCHE PATENTANMELDUNG

(11) **EP 3 865 249 A1**
(43) Veröffentlichungstag der Anmeldung: **18.08.2021**
(21) Anmeldenummer: 20203342.9
(22) Anmeldetag: 22.10.2020
(51) Int. Cl.: B23Q 11/10

(54) **VERFAHREN ZUR KÜHLUNG UND SCHMIERUNG VON ZERSPANPROZESSEN**

(30) Priorität: 12.02.2020 DE 102020103670
(71) Anmelder: Knoll Maschinenbau GmbH, 88348 Bad Saulgau (DE)
(72) Erfinder: Rother, Reiner, 72574 Bad Urach (DE)
(74) Vertreter: Otten, Roth, Dobler & Partner mbB Patentanwälte

(57) **Zusammenfassung**

Vorgeschlagen wird ein universelles Verfahren zum Bereitstellen eines Kühlschmiermittels, umfassend die Erzeugung eines flüssigen Gemenges, welche folgende Schritte aufweist: Zuführung eines bei Raumtemperatur bei einem ersten Druck (P1) flüssigen Kühlmittels (1), Zuführung eines Öls (7) als Schmiermittels zu dem Kühlmittel (1), das unter einem zweiten Druck (P2) stehend, der höher als der erste Druck (P1) ist, zugeführt wird, um dem unter dem ersten Druck (P1) stehenden Kühlmittel (1) zugeführt zu werden, und Bildung eines flüssigen Gemenges aus Kühlmittel (1) und Öl (7), sowie Reduzierung der Drücke (P1, P2), sodass das Kühlmittel (1) gasförmig und das Öl (7) durch den Übergang des Kühlmittels (1) in den gasförmigen Zustand tröpfchenförmig verteilt wird.

## Beschreibung

Die Erfindung betrifft ein Verfahren zum Bereitstellen eines Kühlschmiermittels, insbesondere zum Kühlen und Schmieren eines ein Werkstück bearbeitenden Werkzeugs, ein Verfahren zur Bearbeitung eines Werkstücks sowie eine Werkzeugmaschine zur Bearbeitung eines Werkstücks.

Aus dem Stand der Technik ist beispielsweise aus der EP 2 574 424 B1 ein Verfahren zur Kühlung von Aerosolen bekannt, wobei die Aerosole wiederum zur Kühlung von Werkzeugen, die in einer Werkzeugmaschine einen Zerspanungsprozess durchführen, eingesetzt werden.

Aufgabe der Erfindung ist es, ein Verfahren zur Kühlung bzw. Schmierung bei zerspanenden Prozessen weiterzuentwickeln, sodass dieses möglichst flexibel und universell einsetzbar ist.

Die Aufgabe wird, ausgehend von einem Verfahren bzw. einer Werkzeugmaschine der eingangs genannten Art, durch die Merkmale der Ansprüche 1 bzw. 2 sowie durch die kennzeichnenden Merkmale des Anspruchs 3 gelöst.

Durch die in den abhängigen Ansprüchen genannten Maßnahmen sind vorteilhafte Ausführungen und Weiterbildungen der Erfindung möglich.

Das erfindungsgemäße Verfahren dient zur Bereitstellung eines Kühlschmiermittels, insbesondere zum Kühlen und Schmieren eines ein Werkstück bearbeitenden Werkzeugs. Die Erfindung ist insbesondere einsetzbar im Zusammenhang mit der sogenannten Minimalmengenschmierung. Unter anderem bietet eine Minimalmengenschmierung den Vorteil, dass kostengünstig und umweltfreundlich ein Werkzeug, insbesondere bei Zerspanprozessen, geschmiert werden kann. Die Schmierung erfolgt in der Regel in Kombination mit einer Kühlung des Werkzeugs, wofür Aerosole eingesetzt werden. Ein Aerosol ist ein Gemisch aus einem Transportgas und darin fein zerstäubten Flüssigkeitströpfchen, meistens Öltröpfchen. Da durch größere Mengen an Aerosol grundsätzlich auch eine stärkere Kühlung eines Werkzeugs erfolgen kann, stellt die Minimalmengenschmierung und das Verwenden möglichst geringer Mengen an Kühlmittel technisch eine besondere Herausforderung dar.

Das erfindungsgemäße Verfahren zum Bereitstellen eines Kühlschmiermittels zeichnet sich in vorteilhafter Weise unter anderem dadurch aus, dass ein flüssiges Gemenge erzeugt wird, wozu folgende Schritte eingesetzt werden:
- Zunächst wird ein Kühlmittel in flüssigem Aggregatzustand bereitgestellt, insbesondere Kohlendioxid oder Stickstoff, welches also bei Raumtemperatur (etwa 25 °C) und bei Normaldruck von etwa 1 bar sonst gasförmig wäre. Dazu steht das Kühlmittel unter einem ersten Druck, der so hoch ist, dass das Kühlmittel in verflüssigtem Zustand vorliegt. Bei Kohlendioxid können z.B. Drücke in der Größenordnung von 40 bar bis ca. 60 bar beispielsweise eingesetzt werden, sodass dieses in flüssiger Form vorliegt.

- Die Erfindung sieht nun vor, sogleich dem flüssigen Kühlmittel Öl als Schmiermittel zuzuführen, insbesondere noch bevor das Kühlmittel zum Werkzeug gelangt und dort etwa über eine Düse oder einen Ausgang im Werkzeug selbst abgegeben wird und wieder in den gasförmigen Zustand übergeht. Um jedoch das Öl dem Kühlmittel zuführen zu können, steht das Öl vorzugsweise unter einem zweiten Druck, der höher ist als der erste Druck. Beide Flüssigkeiten bilden ein flüssiges Gemenge, eine Emulsion, ohne chemisch miteinander zu reagieren.
- Schließlich sieht das erfindungsgemäße Verfahren vor, in Bezug auf dieses flüssige Gemenge die Drücke zu reduzieren, sodass das Kühlmittel gasförmig wird und das Öl durch den Übergang des Kühlmittels in den gasförmigen Zustand tropfenförmig unter Bildung sehr feiner Tröpfchen verteilt wird.

In vorteilhafter Weise wird somit ermöglicht, dass das Öl als Schmiermittel homogener verteilt wird. Dadurch kann auch die Menge des Schmiermittels grundsätzlich zur Schmierung eines Bearbeitungsprozesses geringer ausfallen, sodass sich in vorteilhafter Weise dieses Verfahren insbesondere zur Minimalmengenschmierung besonders gut eignen kann. Das Verfahren ist somit kostengünstig umweltfreundlich einsetzbar. Darüber hinaus kann ein besseres Bearbeitungsergebnis erzielt werden, da der Bearbeitungsprozess unmittelbar durch eine gleichmäßigere Schmierung beeinflusst wird. In vorteilhafter Weise wird durch die Erfindung vermieden, dass durch Expansion des Kühlmittels beim Übergang in den gasförmigen Zustand das Schmiermittel bzw. Öl infolge des Drucks in eine Richtung gedrängt wird und somit dem zu kühlenden bzw. schmierenden Bereich nur unvollständig oder ungleichmäßig benetzt.

Insbesondere ermöglicht das erfindungsgemäße Verfahren aber auch einen flexibleren Einsatz. Während herkömmliche, aus dem Stand der Technik bekannte Verfahren beim Bereitstellen von Kühlschmiermittel in der Regel wenigstens zwei Kanäle benötigen, kann hier die Kühl-Schmiermittel-Zufuhr zum Zerspanungswerkzeug mit nur einem Kanal auskommen, da das bereitgestellte Kühlschmiermittel erfindungsgemäß im flüssigen Zustand in Form eines Gemenges aus Kühlmittel und Schmiermittel vorliegt. Herkömmliche Verfahren nach dem Stand der Technik waren aus diesem Grunde oftmals entweder nur bei größeren Werkzeugen einsetzbar, die wegen ihrer Größe problemlos auch über wenigstens zwei Zuführkanäle verfügen können. Erforderte ein Zerspanungsvorgang jedoch kleine Werkzeuge, so konnten vielfach herkömmliche Verfahren nach dem Stand der Technik nur dann eingesetzt werden, wenn es sich bei den verwendeten kleinen Werkzeugen um Sonderanfertigungen mit zwei Kanälen handelte. Kleine Sonderwerkzeuge können aber aufgrund ihrer geringen Dimensionierung, gerade im Bereich der Schneiden bei zerspanenden Werkzeugen oder der Werkzeugspitze, auch nur sehr aufwendig mehr als einen Kanal im Inneren unterbringen und sind daher, sofern überhaupt möglich, sehr teuer. Diese Bereitstellung von Sonderwerkzeugen kann somit erfindungsgemäß vermieden werden, da das erfindungsgemäße Verfahren auch mit einem Kanal auskommt.

Dementsprechend zeichnet sich das erfindungsgemäße Verfahren zur Bearbeitung eines Werkstücks mit einem Werkzeug, welches eine einkanalige Kühl-Schmiereinrichtung aufweist, dadurch aus, dass das erfindungsgemäße Verfahren zur Bereitstellung eines Kühlschmiermittels unter Erzeugung eines flüssigen Gemenges aus Kühlmittel und Schmiermittel bzw. eines der entsprechenden Ausführungsbeispiele verwendet wird. Die Reduzierung der Drücke kann dabei am Ausgang des Kanals der Kühl-Schmiereinrichtung erfolgen, bei welcher das Kühlmittel sodann gasförmig wird und expandiert. Die Druckminderung des Kühlmittels, die sodann zum Übergang des Kühlmittels in den gasförmigen Zustand führt, kann beispielsweise an einer Düse oder am Ausgang des Werkzeugs (bevorzugt) erfolgen.

Jedenfalls ist es beim Übergang von einem Stator zum Rotor, in der Regel zum Werkzeug, eingesetzt in der Werkzeugspannvorrichtung, notwendig, das flüssige Gemenge z.B. durch eine Drehdurchführung durchzuleiten, sodass dieses vom Stator der Werkzeugmaschine in das sich drehende Werkzeug gelangen kann. Auf diese Weise kann erfindungsgemäß bei der Werkstückbearbeitung mit Werkzeugen bzw. Werkzeugmaschinen unter Zuhilfenahme des erfindungsgemäßen Verfahrens ein sehr breites Spektrum an Werkzeugen zur Zerspanung eingesetzt werden, ohne dass eine besondere Anpassung der Kühlschmierung erfolgen muss. Ferner können die bereits oben erwähnten Vorteile, insbesondere im Zusammenhang mit der Anwendung für die Minimalmengenschmierung, genutzt werden.

Eine erfindungsgemäße Werkzeugmaschine zur Bearbeitung eines Werkstücks mit einem Werkzeug umfasst grundsätzlich einen Stator und einen Rotor, wobei der Rotor mit einer WerkzeugSpannvorrichtung zum Einspannen und Halten des Werkzeugs während der Bearbeitung ausgestattet ist. Grundsätzlich können in der Werkzeugmaschine sowohl ein- als auch mehrkanalige Kühl-Schmiereinrichtungen vorgesehen sein, wobei zur Anwendung des erfindungsgemäßen Verfahrens auch eine einkanalige Kühl-Schmiereinrichtung ausreichend sein kann. Ferner ist eine Vorrichtung zur Erzeugung eines Kühl-Schmiermittel vorgesehen, bei der erfindungsgemäß das Verfahren zur Bereitstellung des Kühlschmiermittel gemäß der Erfindung bzw. das Verfahren zur Bearbeitung des Werkstücks gemäß der Erfindung eingesetzt wird und auch hier somit die Vorteile genutzt werden können, wobei insbesondere die Werkzeugmaschine auch für ein breites Spektrum an Werkzeugen zur Verfügung steht.

Außerdem ist es denkbar, das Kühlschmiermittel vom Stator aus dorthin zu leiten, wo der Bearbeitungsprozess gerade stattfindet. Zu diesem Zweck ist beispielsweise eine Düse am Stator vorgesehen, die dahin ausgerichtet werden kann, wo das Werkzeug mit dem Werkstück in Kontakt kommt. Um eine besonders effektive Kühlschmierung an der Bearbeitungsstelle zu erreichen, können jedoch auch innerhalb des Werkzeugs entsprechende Kanäle vorgesehen sein, um ein Kühlschmiermittel zur Bearbeitungsstelle zuführen zu können. Da bei Zerspanungsvorgängen, insbesondere beim Bohren, Fräsen oder dergleichen, drehende Werkzeuge eingesetzt werden, ist es vorteilhaft, bei einem Ausführungsbeispiel der Erfindung eine Drehdurchführung vorzusehen, um das Kühl-Schmiermittel der Werkzeugspannvorrichtung bzw. der Kühl-Schmiereinrichtung des Werkzeugs zuzuführen. Die Werkzeugspannvorrichtung kann dabei wenigstens einen Kanal zum Leiten des Kühl-Schmiermittel umfassen. Auf diese Art und Weise kann eine möglichst effektive Kühl-Schmierung, insbesondere auch eine Minimalmengenschmierung realisiert werden. Zu diesem Zweck kann jedoch bei einer Ausführungsvariante der Erfindung der Stator bzw. die Werkzeugspannvorrichtung eine Düse zur Abgabe des Kühlschmiermittels umfassen. Erfolgt eine Weiterleitung des Kühlschmiermittels durch einen Kanal eines Werkzeugs, so kann in vorteilhafter Weise die Werkzeugspannvorrichtung eine Einkopplungsvorrichtung umfassen, um das Kühl-Schmiermittel in die Kühl-Schmiermittel-Einrichtung des Werkzeugs einzuleiten. Ferner können grundsätzlich diese unterschiedlichen Wege zur Leitung des Kühl-Schmiermittels kontrollierbar (öffenbar bzw. schließbar) ausgebildet sein, sodass, je nach Anwendungsfall, unterschiedliche Kühlschmierungsvarianten möglich sind.

Dementsprechend kann in vorteilhafter Weise bei einer Weiterbildung der Erfindung eine Verteilervorrichtung vorgesehen sein, um das Kühlschmiermittel z.B. zur Düse des Stators bzw. zum Rotor, d.h. zur Werkzeugspannvorrichtung, und/oder zu einer Einkopplungsvorrichtung der Werkzeugspannvorrichtung zu leiten. Der Verteiler ermöglicht es, einfach die passende Kühlschmierung auch über eine Kontrollvorrichtung bzw. die Maschinensteuerung einstellen zu können, die für den gerade anstehenden Zerspanungsprozess in vorteilhafter Weise eingesetzt wird.

Darüber hinaus kann bei einem Ausführungsbeispiel der Erfindung einer entsprechenden Werkzeugmaschine auch zusätzlich eine Vorrichtung zur Erzeugung eines Aerosols vorgesehen sein, welche die Kühlung unterstützt. Ferner ist es möglich, eine Vorrichtung zur Zuführung von Druckluft vorzusehen. Eine Kühlung über ein Aerosol kann z.B. dann eingesetzt werden, wenn schwer zerspanbare Materialien bearbeitet werden müssen. Beim Schlichten schwer zerspanbarer Materialien, bei denen vergleichsweise geringe Materialmengen zur Feinbearbeitung abgetragen werden, genügt in der Regel die Zufuhr eines Aerosols zur Kühlung bzw. Schmierung. Bei Grobbearbeitungsprozessen wie dem Schruppen jedoch wird neben dem Aerosol oftmals noch flüssiges Kohlendioxid als Kühlmittel eingesetzt. Eine vorteilhafte Ausführungsvariante einer entsprechenden Werkzeugmaschine gemäß der Erfindung kann, gegebenenfalls zusätzlich, derartige Zuführungen verschiedener Kühl-Schmiermittel-Kombinationen ergänzend vorsehen. Hierdurch wird ein hohes Maß an Flexibilität in Bezug auf unterschiedlichste Werkzeugarten und auch unterschiedlichster zu bearbeitende Werkstücke ermöglicht.

Bei einer Ausführungsvariante der Erfindung ist die Kühl-Schmiermittel-Verteilervorrichtung dazu ausgebildet, zur Düse des Stators bzw. der Werkzeugspannvorrichtung bzw. zur Einkopplungsvorrichtung der Werkzeugspannvorrichtung einstellbar folgende Mittel zu leiten:
- Druckluft wird aus einer Vorrichtung zur Zuführung von Druckluft verwendet, wobei die Druckluft dafür sorgen kann, dass eine Kühlung erfolgt bzw. Späne beim Zerspanungsprozess möglichst rasch aus dem Bearbeitungsbereich hinaus gelangen können. Die reine Zuführung von Druckluft ist in der Regel bei einfachen Zerspanungsprozessen gefordert, bei dem keine allzu schwer zu bearbeitenden Materialien vorliegen bzw. auch nur ein geringer Materialabtrag erfolgt, d.h. es werden keine hohen Anforderungen an die Kühlung gestellt. Hierzu wird in der Regel auch nur ein Kanal benötigt.
- Es ist auch denkbar, Druckluft und Kühlmittel gleichzeitig bereitzustellen, wobei die Druckluft aus einer Vorrichtung zur Zuführung von Druckluft stammt, und beide getrennt durch eine Düse oder durch die Einkopplungsvorrichtung geführt werden können. Bei derartigen Zerspanungsprozessen wird, im Gegensatz zum Einsatz von Druckluft allein, auch noch ein Kühlmittel benötigt, da der Zerspanungsprozess regelmäßig mit höheren Temperaturen verbunden ist.
- Ferner kann das Aerosol, wie bereits erwähnt, bei schwerer zu zerspanenden Materialien eingesetzt werden.

Entsprechend ist auch, wie bereits dargestellt, eine Kombination von Schmier- und Kühlmitteln, die beide getrennt durch eine Düse bzw. ein Kopplungsvorrichtung zugeführt werden, optional möglich. Außerdem kann Kühlmittel alleine verwendet werden und/oder ein Kühl-Schmiermittel. Eine erfindungsgemäße Werkzeugmaschine gemäß dem vorliegenden Ausführungsbeispiel ermöglicht also, über die Verteilervorrichtung die je nach Zerspanungsprozess und Werkzeug, je nach Menge des Materialabtrags und je nach Art des zu zerspanenden Materials unterschiedliche Arten der KühlSchmierung vorzusehen.

Ein besonderes Augenmerk ist auch auf die Zuführung des Öls als Schmiermittel zum flüssigen Kühlmittel zu richten. Zu diesem Zweck kann/können beispielsweise eine Hochdruckdosierpumpe und/oder ein Hydraulikaggregat vorgesehen sein. Hochdruckdosierpumpen ermöglichen auch bei sehr kleinen Mengen eine besonders genaue Dosierung, auch bei sehr hohen Drücken. Stattdessen kann aber grundsätzlich auch ein Hydraulikaggregat zum Pumpen des Schmiermittels bzw. des Öls eingesetzt werden.

Zur besonders genauen und präzisen Dosierung des Öls, aber auch zur Anpassung des Öldrucks, ist es bei einer besonders bevorzugten Weiterbildung der Erfindung denkbar, der Hochdruck dosierpumpe und/oder dem Hydraulikaggregat einen Massedurchflussregler nachzuschalten. In diesem kann in der Regel auch die Ölmenge in Abhängigkeit vom Öldruck noch einmal angepasst werden, d.h. der Massedurchflussregler kann selbst den zweiten Druck kontrollieren. Ferner kann dem Massedurchflussregler ein Abschaltventil nachgeschaltet sein, um gegebenenfalls die Öl-Zufuhr an das Kühlmittel zu stoppen oder aber auch wiederum zuzulassen.

Insgesamt kann eine Kontrollvorrichtung zum Steuern und/oder Regeln vorgesehen sein, die sowohl an die Kühl-Schmiermittel-Verteilervorrichtung als auch an die Zuführung des Öls über eine Hochdruckdosierpumpe bzw. ein Hydraulikaggregat bzw. den Massedurchflussregler und gegebenenfalls das Öl-Schaltventil angekoppelt ist, sodass je nach Zerspanungsvorgang z.B. auch nur Kühlmittel ohne Öl-Beifügung verwendet werden kann und dieses gegebenenfalls über eine Düse im Stator oder über eine Einkopplungsvorrichtung der Werkzeugspannvorrichtung an das Werkzeug geleitet wird.

### Ausführungsbeispiel

Ein Ausführungsbeispiel der Erfindung ist in der Zeichnung dargestellt wird nachstehend unter Angabe weiterer Einzelheiten und Vorteile näher erläutert. Im Einzelnen zeigt:

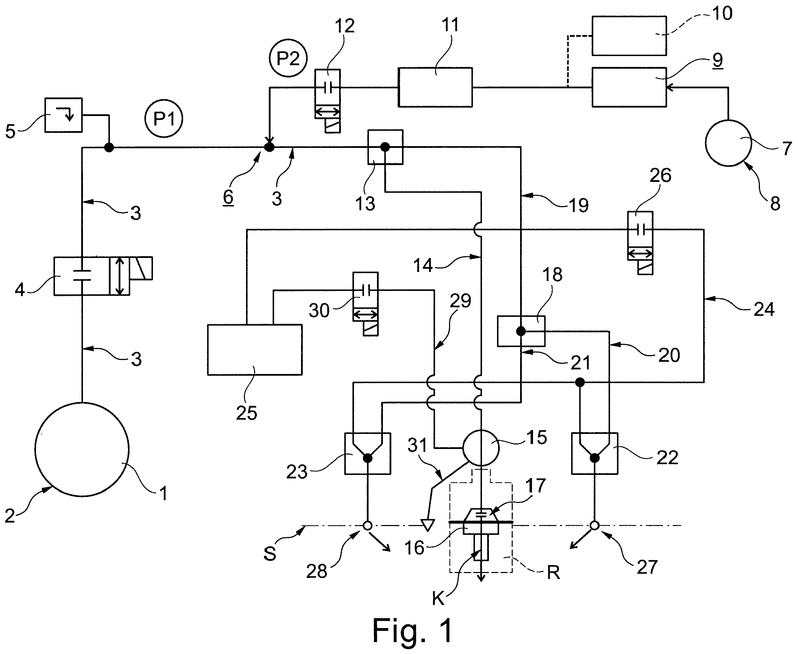

- Figur 1:: einen schematischen Schaltungsaufbau einer Kühl-Schmiereinrichtung mit Kühl-Schmiermittel-Verteilervorrichtung zur Durchführung eines erfindungsgemäßen Verfahrens bzw. als Teil einer erfindungsgemäßen Werkzeugmaschine.

Fig. 1: eine schematische Darstellung eines Schaltung zum Bereitstellen eines Kühlschmiermittels, insbesondere unter Erzeugung eines flüssigen Gemenges gem. der Erfindung.

Figur 1 zeigt ein Schema einer Hydraulikschaltung, mit der das erfindungsgemäße Verfahren zur Bereitstellung eines Kühlschmiermittels ausgeführt werden kann. Diese kann in eine Werkzeugmaschine implementiert werden, um eine Kühl-Schmierung bei einer Werkstückbearbeitung in Form einer Zerspanung bereitzustellen.

Das Kühlmittel 1, hier Kohlendioxid, wird in einer Kühlmittelversorgungseinheit 2, bei der sich z.B. um ein Gasflaschenbündel handelt, bevorratet und kann über die Kühlmittelleitung 3 in die Schaltung zugeführt bzw. weitergeleitet werden. Als Kühlmittel kann z.B. auch Stickstoff grundsätzlich eingesetzt werden. Zur Unterbrechung der Kühlmittelversorgung und somit der Leitung 3 ist ein Absperrventil und/oder eine Sicherheitsventileinheit 4 vorgesehen, die in der Darstellung von Figur 1 vereinfacht als Ventil 4 dargestellt wird.

Der Druck wird, hier schematisch über die Kompressionseinheit 5 auf ca. 70 bar (gegebenenfalls mehr) erhöht auf einen ersten Druck P1, bei dem das Kohlendioxid bei Raumtemperatur (ca. 25°C) verflüssigt ist.

Am Knotenpunkt 6 wird der Flüssigkeit 1 als Schmiermittel Öl 7 zugeführt. Das Öl 7 ist in einem Ölbehälter 8 bevorratet und ohnehin bei Raumtemperatur bereits flüssig. Es wird über eine Hochdruckdosierpumpe 9 aus dem Behälter 8 gepumpt und dabei bereits auf einen höheren Druck (zweiter Druck P2) gebracht. Optional kann z.B. auch ein Hydraulikaggregat 10 anstelle der Hochdruckdosierpumpe 9 eingesetzt werden. Zur präzisen Dosierung ist der Hochdruckdosierpumpe 9 bzw. dem Hochdruckaggregat 10 ein Massedurchflussregler 11 nachgeschaltet, mit dem auch der Druck des Öls 7 eingestellt bzw. nachgeregelt werden kann. Schließlich ist dem Massendruckregler 11 ein Absperrventil 12 nachgeschaltet, um den Öleintrag in die Leitung 3 gegebenenfalls zu unterbinden. Das Öl 7 wird dabei auf einen zweiten Druck P2 gebracht, der höher als der erste Druck P1 in der Leitung 3 ist, da sonst ein Eintrag in die Leitung 3 nicht möglich wäre.

Über den Verteiler 13 führt die Leitung 14, die das ab dem Punkt 6 gebildete Flüssigkeitsgemenge aus flüssigem Kühlmittel 1 und Öl 7 leitet, zu einer Drehdurchführung 15. Bis zur Drehdurchführung 15 ist dieser Teil der Schaltung bzw. der Flüssigkeitsleitung in den Stator einer Werkzeugmaschine implementiert. Die Drehdurchführung 15 ermöglicht eine Leitung des Flüssigkeitsgemenges in den Rotor R (Baueinheit des Rotors R ist in Fig. 1 gestrichelt umrahmt), hier in die Werkzeugspannvorrichtung 16, die wiederum über eine Einkopplungsvorrichtung 17 eine Einkopplung bzw. Einleitung des Flüssigkeitsgemenges in das Werkzeug, das eine einkanalige Leitung als Kühl-Schmiereinrichtung K umfasst und das KühlSchmiermittel zur Werkzeugspitze leitet.

Statt zur Drehdurchführung 15 bzw. zum Rotor R der Werkzeugmaschine kann das Gemenge vom Verteiler 13 auch einen weiteren Verteiler 18 über die Leitung 19 geleitet werden. Dieser Verteiler 18 wiederum führt das Gemenge über die Leitungen 20, 21 jeweils zu zwei Aerosol-Kupplungen 22, 23. Gleichzeitig führt zu den jeweiligen Aerosol-Kupplungen 22, 23 eine Leitung 24 von einem Aerosol-Erzeuger 25. Die Leitung 24 kann über ein Ventil 26 geöffnet bzw. geschlossen werden. Die Aerosol-Kupplungen 22, 23 führen jeweils zu einer Düse 27, 28 (am Stator), über die entsprechend flüssiges Kühlmittel 1 und Aerosol in Richtung der Zerspanung abgegeben werden können.

Eine weitere Aerosol-Leitung 29 leitet Aerosol direkt zur Drehdurchführung 15. Somit kann Aerosol auch in den Rotor R eingeleitet werden. Über die Einkopplungsvorrichtung 17 gelangt das Aerosol in den Kanal des Werkzeugs. Die Leitung 29 ist über ein Ventil 30 absperrbar. Aus der Drehdurchführung 15 sorgt eine Leckageleitung 31 zur Ableitung von Leckageflüssigkeit.

Die gestrichpunktete Linie S in Fig. 1 bezeichnet den Übergang von der Werkzeugmaschine zum Bearbeitungsbereich, sodass die Düse, 27, 28 das Kühl- / Schmiermittel, wie auch die Leckageleitung 31, nach außen in den Bearbeitungsbereich abgeben können. Am Übergang zum Bearbeitungsbereich befindet sich auch das Werkzeug mit Spannvorrichtung 16.

Zudem ist mit der Aerosolleitung 29 auch die Zufuhr von reiner Druckluft möglich, sodass für die Kühlung bzw. Schmierung folgende Schmier- bzw. Kühlmittelzufuhr, je nach Material und Art der Bearbeitung, in Betracht kommen können:
- flüssiges Kühlmittel
- ein Gemenge aus flüssigem Kühlmittel und Öl
- oder Druckluft verwendet werden kann
- ein Aerosol
- ein Gemisch aus Aerosol und Kühlmittel.

Die Vorrichtung 25 dient zudem auch der Erzeugung von Druckluft.

Die Erfindung zeichnet sich vor allem dadurch aus, dass sie einen flexiblen Einsatz ermöglicht und Sonderwerkzeuge vermieden werden können.

### Bezugszeichen:

- 1: Kühlmittel
- 2: CO2-Versorgung
- 3: Leitung
- 4: Absperrventil
- 5: Leitung
- 6: Knotenpunt (Öl-Einspeisung)
- 7: Öl
- 8: Öl-Behälter
- 9: Hochdruckdosierpumpe
- 10: Hydraulik-Aggregat
- 11: Massedurchflussregler
- 12: Ventil
- 13: Verteiler
- 14: Leitung
- 15: Drehdurchführung
- 16: Werkzeugspanneinheit
- 17: Einkopplungsvorrichtung
- 18: Verteiler
- 19: Leitung
- 20: Leitung
- 21: Leitung
- 22: Aerosol-Kupplung
- 23: Aerosol-Kupplung
- 24: Leitung
- 25: Aerosol-Erzeuger
- 26: Ventil
- 27: Düse
- 28: Düse
- 29: Leitung
- 30: Ventil
- 31: Leckageleitung
- K: einkanalige Kühl-Schmiereinrichgung
- P1: erster Druck
- P2: zweiter Druck
- R: Rotor
- S: Schnittstelle zwischen Werkzeugmaschine und Zerspanungsbereich

## Patentansprüche

1. Verfahren zum Bereitstellen eines Kühlschmiermittels, insbesondere zum Kühlen und Schmieren eines ein Werkstück bearbeitenden Werkzeugs, umfassend die Erzeugung eines flüssigen Gemenges, welche folgende Schritte aufweist:
• Zuführung eines bei Raumtemperatur bei einem ersten Druck (P1) flüssigen Kühlmittels (1),
• Zuführung eines Öls (7) als Schmiermittels zu dem Kühlmittel (1), das unter einem zweiten Druck (P2) stehend, der höher als der erste Druck (P1) ist, zugeführt wird, um dem unter dem ersten Druck (P1) stehenden Kühlmittel (1) zugeführt zu werden, und Bildung eines flüssigen Gemenges aus Kühlmittel (1) und Öl (7),
• Reduzierung der Drücke (P1, P2), sodass das Kühlmittel (1) gasförmig und das Öl (7) durch den Übergang des Kühlmittels (1) in den gasförmigen Zustand tröpfchenförmig verteilt wird.

2. Verfahren zur Bearbeitung eines Werkstücks mit einem Werkzeug, welches eine einkanalige Kühl-Schmiereinrichtung (K) aufweist, **dadurch gekennzeichnet, dass** zum Bereitstellen eines Kühlschmiermittels ein Verfahren nach einem der vorgenannten Ansprüche verwendet wird, wobei die Reduzierung der Drücke (P1, P2), bei der das Kühlmittel (1) gasförmig wird, am Ausgang des Kanals der Kühl-Schmiereinrichtung erfolgt.

3. Werkzeugmaschine zur Bearbeitung eines Werkstücks mit einem Werkzeug, mit einem Stator und einem Rotor (R), der eine Werkzeugspannvorrichtung (16) zum Einspannen und Halten des Werkzeugs während des Bearbeitungsvorgangs umfasst, insbesondere eines Werkzeugs, welches eine ein-oder mehrkanalige Kühl-Schmiereinrichtung (K) aufweist, wobei eine Vorrichtung zum Erzeugen eines KühlSchmiermittels vorgesehen ist, **dadurch gekennzeichnet, dass** die Vorrichtung zum Erzeugen des Kühl-Schmiermittels dazu ausgebildet ist, das Kühl-Schmiermittel mittels eines Verfahrens nach der vorgenannten Ansprüche bereitzustellen.

4. Werkzeugmaschine nach einem der vorgenannten Ansprüche, **dadurch gekennzeichnet, dass** eine Drehdurchführung (15) vorgesehen ist, um das Kühl-Schmiermittel der Werkzeugspannvorrichtung (16) und/oder der Kühl-Schmiereinrichtung (K) des Werkzeugs zuzuführen, wobei insbesondere die Werkzeugspannvorrichtung (16) wenigstens einen Kanal zum Leiten von Kühl-Schmiermittel umfasst.

5. Werkzeugmaschine nach einem der vorgenannten Ansprüche, **dadurch gekennzeichnet, dass** der Stator und/oder die Werkzeugspannvorrichtung (16) eine Düse (27, 28) zur Abgabe des Kühl-Schmiermittels umfasst/umfassen und/oder dass die Werkzeugspannvorrichtung (16) eine Einkopplungsvorrichtung (17) umfasst, um das KühlSchmiermittel in die Kühl-Schmiermitteleinrichtung (K) des Werkzeugs einzuleiten.

6. Werkzeugmaschine nach einem der vorgenannten Ansprüche, **dadurch gekennzeichnet, dass** eine Kühl-Schmiermittel-Verteilervorrichtung (13, 15, 18, 22, 23) vorgesehen ist, um das Kühl-Schmiermittel wie folgt zu leiten:
• zur Düse (27, 28) des Stators und/oder der Werkzeugspannvorrichtung und/oder
• zur Einkopplungsvorrichtung (17)der Werkzeugspannvorrichtung (16).

7. Werkzeugmaschine nach einem der vorgenannten Ansprüche, **dadurch gekennzeichnet, dass**:
• eine Vorrichtung (25) zur Erzeugung eines Aerosols vorgesehen ist und/oder
• eine Vorrichtung (25) zur Zuführung von Druckluft vorgesehen ist.

8. Werkzeugmaschine nach einem der vorgenannten Ansprüche, **dadurch gekennzeichnet, dass** die Kühl-Schmiermittel-Verteilervorrichtung (13, 15, 18, 22, 23) dazu ausgebildet ist, zur Düse (27, 28) des Stators und/oder der Werkzeugspannvorrichtung und/oder zur Einkopplungsvorrichtung (17) der Werkzeugspannvorrichtung (16) einstellbar folgende Mittel zu leiten:
• Druckluft aus der Vorrichtung (25) zur Zuführung von Druckluft und/oder
• Druckluft aus der Vorrichtung (25) zur Zuführung von Druckluft und das Kühlmittel (1), wobei beide getrennt durch die Düse und/oder die Einkopplungsvorrichtung (17) vermengt werden, und/oder
• das Aerosol aus der Vorrichtung (25) zur Erzeugung von Aerosol und/oder
• das zweite Aerosol aus der Vorrichtung (25) zur Erzeugung von Aerosol und das Kühlmittel (1), wobei beide getrennt durch die Düse und/oder die Einkopplungsvorrichtung (17) geführt werden, und/oder
• das Kühlmittel (1) und/oder
• das Kühl-Schmiermittel.

9. Werkzeugmaschine nach einem der vorgenannten Ansprüche, **dadurch gekennzeichnet, dass** eine Hochdruckdosierpumpe (9) und/oder ein Hydraulikaggregat (10) vorgesehen ist / sind, um das Öl (7) dem Kühlmittel (1) unter dem zweiten Druck (P2) zuzuführen.

10. Werkzeugmaschine nach einem der vorgenannten Ansprüche, **dadurch gekennzeichnet, dass** der Hochdruckdosierpumpe (9) und/oder dem Hydraulikaggregat (10) ein Massedurchflussregler (11) zur Regelung der Ölmenge und/oder des Öldrucks nachgeschaltet ist, wobei insbesondere dem Massedurchflussregler (11) ein Öl-Schaltventil (12) nachgeschaltet ist, um Öl-Zufuhr (7) an das Kühlmittel (1) zu stoppen oder zuzulassen.
